# EUROPEAN PATENT APPLICATION

(11) **EP 3 527 640 A1**
(43) Date of publication of application: **21.08.2019**
(21) Application number: 17860115.9
(22) Date of filing: 06.10.2017
(51) Int. Cl.: C09J 7/20

(54) **WATERPROOF SHEET MADE OF SILICONE RUBBER, AND WATERPROOFING METHOD**

(30) Priority: 12.10.2016 JP 2016200727
(71) Applicant: Shin-Etsu Chemical Co., Ltd., Tokyo 100-0004 (JP)
(72) Inventor: UNO Takao, Annaka-shi Gunma 379-0224 (JP); TAKEWAKI Kazuyuki, Annaka-shi Gunma 379-0224 (JP)
(74) Representative: Mewburn Ellis LLP
(86) International application number: PCT/JP2017/036466
(87) International publication number: WO 2018/070352

(57) **Abstract**

This+ waterproof sheet made of a silicone rubber is characterized by being provided with: a base material layer obtained by curing a silicone rubber composition; and a pressure-sensitive adhesive layer comprising a cured product of a silicone gel composition laminated on one surface of the base material layer, wherein, on the other surface of the base material layer, a coating layer containing a silicone resin represented by average composition formula (1):

[RSiO_{3/2}]ₘ[R₂SiO]ₙ

(in the formula, each R represents an identical or a different monovalent hydrocarbon group that is unsubstituted or substituted and that contains 1-20 carbon atoms, m is 0.45-1.0, n is 0-0.55, and m+n ≤ 1.0 is satisfied) is included.

## Description

### TECHNICAL FIELD

The present invention relates to a waterproof silicone rubber sheet which, by liquid-tight attachment so as to cover at least part of an object at places that require waterproofing, such as in drainage facilities made up of structures that include at least one of the following: concrete structures, mortar structures, metal structures and plastic structures, at the edges of structures built so that rainwater flows out from expansion joints in gaps, etc. on roadways, railroads and the like, at the boundary between the bottom and the foundation of outdoor tanks, particularly large-size tanks, and in buildings, including factories and ordinary houses, can be effectively used to prevent moisture infiltration and to guard against or retard deterioration of the object over time, and which has been treated to prevent the sheet exterior from becoming dirty with outdoor use. The invention also relates to a waterproofing method that uses such a waterproof sheet.

### BACKGROUND ART

From the standpoint of ensuring the safety and coping with the aging of social infrastructure, as well as preventive maintenance and disaster prevention, the waterproofing treatment of social infrastructure has been a topic of interest lately. For example, on ordinary roads, highways and railroads, including bridges, tunnels and viaducts, various measures are being taken to keep rainwater from collecting on the road surface. Specifically, in one approach employed on roads, a drainage ditch or conduit is placed near the road shoulder and the road is gently sloped toward the shoulder so as to cause rainwater to flow toward the shoulder side and off the road. In another approach, expansion joints are provided between roads or in, for example, the gap between a bridge and the normal road surface so that rainwater is discharged through the joints. Many types of such structures exist, including ones made of steel and others made of concrete, although there is a concern that, owing to the effects of moisture, these tend to undergo deterioration such as rust formation, loss of strength, and the peeling/falling off of material from the structure more readily than in other places.

Also, outdoor tanks are required to be waterproofed so that rainwater does not pass through the boundary between the bottom and foundation portions of the tank, enter the bottom of the tank and there cause corrosive deterioration.

Waterproofing treatment methods include the method of applying a waterproof coating to an object. Such application forms a film that holds off water while exhibiting a water-repelling effect. However, because the film is generally made primarily of a resin such as an acrylic resin or urethane resin and tends to become brittle and develop cracks over time, water infiltrates through the cracked areas, making it difficult for the film to exhibit a long-lasting waterproof performance.

Another way of waterproofing involves the use of a reinforced sheet. Patent Document 1 (JP-A 2011-007030) employs the method of applying and bonding an uncured butyl rubber mixture to a reinforced sheet and evaporating off the solvent so as to form a rubber mixture layer having a film with a higher filler ratio on the outer surface, forming a concrete wall on the outer surface side, and bonding together and integrally uniting the reinforced sheet and the concrete wall by way of the rubber mixture layer. It is possible in this way to obtain a cut-off wall of high mechanical strength that covers a deep underground concrete barrier, but such a method is intended for large-scale operations.

Patent Document 2 (JP-A 2012-215057) and Patent Document 3 (JP-A 2014-070482) each describe a waterproof sheet made of silicone rubber. Because this waterproof sheet has on one side a pressure-sensitive adhesive layer made of silicone gel and the base material is made of a cured silicone rubber composition, the sheet itself has stretchability. The sheet thus readily conforms to cracking and shifting of the installed surface from earthquakes, etc., and to shifting due to shrinkage and expansion caused by warming and cooling, and so has the advantage that waterproofness is maintained even when cracking and shifting arise. Moreover, silicone has excellent heat resistance, cold resistance and weather resistance, and so the waterproofing function is stably maintained over a long period of time in environments where the sheet incurs outdoor exposure.

However, it has been pointed out in some instances that, during the use of a waterproof silicone rubber sheet under outdoor exposure, the sheet exterior undergoes dark discoloration from the initial appearance, marring the sight of the sheet. The immediate cause of this dark discoloration has been found, upon analysis of the soiling ingredients, to be dust and soot present in the outside air. Conceivable mechanisms are that, with the silicone rubber sheet in a state of outdoor exposure, soiling of the sheet surface arises due to accumulation of the ingredients of such dust and soot on the surface of the sheet, or due to the intermingling of low-molecular-weight silicone oil ingredients that bleed from the silicone sealant used as a sealing material at edges and overlapping areas of the sheet with rainwater or the like. Waterproof sheets composed primarily of butyl rubber have an initial appearance that is black, and so marring of the appearance is rarely if ever a problem. However, silicone rubber, unless compounded with carbon or black iron oxide, does not have an outward color that is black. Rather, gray or milky-white translucent products of unremarkable appearance are preferred. Because silicone rubber having such a color becomes statically charged more easily than black silicone rubber, soiling ingredients are thought to readily accumulate on the sheet surface. Soiling does not necessarily occur right away when silicone is the main ingredient. Reports of instances in which soiling has occurred come from, for example, the Ogasawara Islands, the Inland Sea of Japan, and Singapore, which suggests that such soiling tends to arise in regions where the average air temperature is relatively high.

Accordingly, there exists a desire for a waterproof silicone rubber sheet which takes appearances in account and, even when used outdoors in regions where the average air temperature is relatively high, does not conspicuously soil.

### PRIOR ART DOCUMENTS

### PATENT DOCUMENTS

Patent Document 1: JP-A 2011-007030
Patent Document 2: JP-A 2012-215057
Patent Document 3: JP-A 2014-070482

### SUMMARY OF THE INVENTION

### TECHNICAL PROBLEM

It is therefore an object of this invention to provide a waterproof silicone rubber sheet which, even when used under conditions of outdoor exposure where the temperature tends to be relatively high, is resistant to soiling of the sheet surface, has a film hardness that is not too high, is not prone to embrittlement, and has an anti-soiling effect that lasts even with prolonged use. Another object is to provide a method for waterproofing with such a sheet.

### SOLUTION TO THE PROBLEM

The present invention, in order to attain these objects, provides the following waterproof silicone rubber sheet and waterproofing method.
[1] A waterproof silicone rubber sheet having a base material layer obtained by curing a silicone rubber composition, a pressure-sensitive adhesive layer made of a cured silicone gel composition laminated onto one side of the base material layer, and a film layer which is disposed on another side of the base material layer and includes a silicone resin of the average compositional formula (1)

   [RSiO_{3/2}]ₘ[R₂SiO]ₙ (1)

   (wherein R represents like or unlike substituted or unsubstituted monovalent hydrocarbon groups of 1 to 20 carbon atoms, m is from 0.45 to 1.0, n is from 0 to 0.55, and m+n ≤ 1.0).
[2] The waterproof silicone rubber sheet of [1], wherein the film layer is the cured form of an emulsion composition which includes:
   (A) 100 parts by weight of the silicone resin of formula (1),
   (B) 1 to 50 parts by weight of an emulsifying agent, and
   (C) 20 to 1,000 parts by weight of water.
[3] The waterproof silicone rubber sheet of [1] or [2], wherein the silicone gel composition includes:
   (D) 20 to 100 parts by weight of an organopolysiloxane having at least two silicon-bonded alkenyl groups per molecule,
   (E) 0 to 80 parts by weight of a resinous copolymer composed primarily of R²₃SiO_{1/2} units (wherein R² represents substituted or unsubstituted monovalent hydrocarbon groups, at least one of which is an alkenyl group) and SiO₂ units (with the proviso that the sum of components (D) and (E) is 100 parts by weight),
   (F) an organohydrogenpolysiloxane having at least two silicon-bonded hydrogen atoms (SiH groups), in an amount of from 0.5 to 20 parts by weight per 100 parts by weight of the sum of components (D) and (E), and
   (G) an addition reaction catalyst in an amount of from 1 to 1,000 ppm based on the sum of the alkenyl group-containing organopolysiloxanes in components (D) and (E); and the composition has a hardness after curing, as measured with a type CSR-2 durometer, of from 3 to 20.
[4] The waterproof silicone rubber sheet of any of [1] to [3], wherein the base material layer includes a reinforcing layer which is made of reinforcing fibers and has on either side thereof an elastomer layer made of a cured silicone rubber composition.
[5] A method for waterproofing with a waterproof silicone rubber sheet, which method includes the step of liquid-tightly covering an area containing a place where moisture infiltration is to be prevented by installing side-by-side a plurality of the waterproof silicone rubber sheets of any one of [1] to [4], and liquid-tightly overlapping and attaching the mutually adjoining waterproof sheets to an overlap width of at least 5 mm.
[6] The method for waterproofing with a waterproof silicone rubber sheet of [5], wherein the waterproof sheet is attached directly without a primer to the place where moisture infiltration is to be prevented, and lateral ends and edges of the attached waterproof sheet are sealed.

### ADVANTAGEOUS EFFECTS OF THE INVENTION

The waterproof sheet provided by the invention includes a base material layer which is obtained by curing a silicone rubber composition and which has on one side thereof a silicone pressure-sensitive adhesive layer and has, formed on a non-adhesive layer side thereof, a film made of a silicone resin. In this way, soil due to dust, soot and the like does not readily adhere to the surface of the waterproof sheet when installed outdoors, making it possible, along with conferring waterproofness, to maintain an appearance after sheet installation in a state close to that when initially installed, for a long period of time.

### BRIEF DESCRIPTION OF THE DRAWINGS

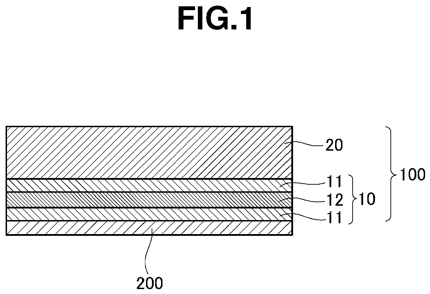

FIG. 1 is a cross-sectional view showing an embodiment of the waterproof sheet of the invention.

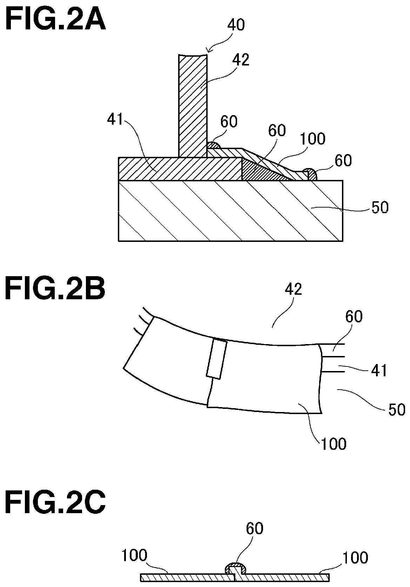

FIG. 2 illustrates an exemplary method for waterproofing with the waterproof sheet of the invention, FIG. 2A being a schematic cross-sectional view of an outdoor tank with the waterproof sheet arranged so as to cover the tank, FIG. 2B being an enlarged plan view of a portion of the waterproofed area, and FIG. 2C being a cross-sectional view showing waterproof sheets in a mutually overlapping and bonded state.

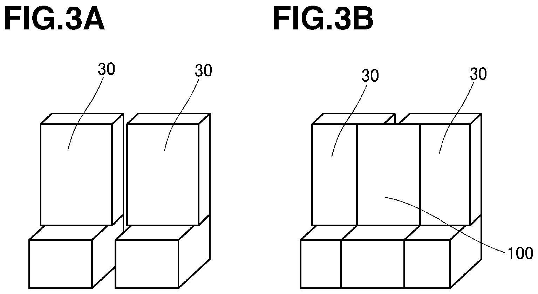

FIG. 3, which illustrates another exemplary method for waterproofing with the waterproof sheet of the invention, shows schematic sectional views depicting placement of the waterproof sheet so as to cover a road parapet, FIG. 3A being a view prior to covering with the waterproof sheet and FIG. 3B being a view following placement of the waterproof sheet.

### DESCRIPTION OF EMBODIMENTS

The present invention relates to a waterproof silicone rubber sheet which, by liquid-tight attachment so as to cover at least part of an object at places that require waterproofing, such as in drainage facilities made up of structures that include at least one of the following: concrete structures, mortar structures, metal structures and plastic structures, at the edges of structures built so that rainwater flows out from expansion joints in gaps, etc. on roadways, railroads and the like, at the boundary between the bottom and the foundation of outdoor tanks, particularly large-size tanks, and in buildings, including factories and ordinary houses, can be effectively used to prevent moisture infiltration and to guard against or retard deterioration of the object over time. The invention also relates to anti-soiling treatment and an anti-soiling treatment method for making the sheet exterior resistant to soiling by dust, soot and the like when used outdoors. This treatment is exemplified by forming a silicone resin film on the sheet surface at the non-adhesive layer side of the sheet.

Based on such considerations as handleability during manufacture and installation of the waterproof sheet, and also heat resistance, weather resistance and cold resistance, and assuming moreover that the service environment may range from frigid cold to scorching hot, silicone rubber is used in the base material layer of the waterproof sheet of the invention.

The silicone rubber is obtained by curing a silicone rubber composition. Exemplary silicone rubber compositions include, by type of curability: organic peroxide-curable compositions, addition-curable compositions, ultraviolet-curable compositions, and electron beam-curable compositions. Although a composition of any type of curability may be used in this case, in terms of the ability to carry out molding in a short time by heating, it is preferable for the silicone rubber sheet to be obtained from an addition reaction (hydrosilylation)-curable silicone rubber composition or an organic peroxide-curable silicone rubber composition.

Organic peroxide-curable silicone rubber compositions that may be used are ones which include an organopolysiloxane having at least two alkenyl groups per molecule and, as the curing agent, an organic peroxide in an amount effective for curing (generally from 1 to 10 parts by weight per 100 parts by weight of the organopolysiloxane). The organic peroxide is exemplified by acyl-type organic peroxides such as p-methylbenzoyl peroxide and o-methylbenzoyl peroxide, alkyl-type organic peroxides such as dicumyl peroxide and 2,5-dimethyl-2,5-bis(tert-butylperoxy)hexane, percarbonate-type organic peroxides and peroxyketal-type organic peroxides.

Addition curing is carried out by reacting, in the presence of a catalyst, an organosiloxane polymer having at least two alkenyl groups per molecule with a compound having at least two functional groups that react with alkenyl groups per molecule. The hydrosilylation reaction (addition reaction) is a good example of such a case. This addition reaction-curable silicone rubber composition may be one that includes an alkenyl group-containing organopolysiloxane having at least two alkenyl groups (typically vinyl groups) per molecule, an organohydrogenpolysiloxane having two or more, preferably three or more, SiH groups (generally in an amount such that the molar ratio of SiH groups with respect to alkenyl group is from 0.5 to 4), and a platinum group metal-based addition reaction catalyst, such as platinum or a platinum compound (generally such that the amount of platinum group metal with respect to the alkenyl group-containing organopolysiloxane is from 1 to 1,000 ppm).

Ultraviolet vulcanization (also referred to as "ultraviolet curing" or "UV curing") is a method that effects curing by irradiating a photopolymerization initiator-containing rubber compound with ultraviolet light having a wavelength of 200 to 400 nm for a period of from several seconds to several tens of seconds. The irradiation wavelength is typically 254 nm or 365 nm. The photopolymerization initiator may be a known product, and is exemplified by Irgacure 184 (from BASF).

Electron-beam vulcanization (also referred to as "electron-beam curing" or "EB curing") is a method that artificially accelerates electrons and utilizes the energy of the accelerated electrons as a beam to induce curing. Curing is regulated by means of the acceleration voltage and the depth of penetration. The electron beam curing system is exemplified by those available from Iwasaki Electric Co., Ltd.

A commercial product may be used as the silicone rubber composition. Examples of organic peroxide-curable silicone rubber compositions include KE-971-U and KE-675-U from Shin-Etsu Chemical Co., Ltd. Examples of addition reaction-curable silicone rubber compositions include KE-551-U, KE-1990-60 and KE-1300T from Shin-Etsu Chemical Co., Ltd.

The rubber properties of the cured silicone rubber composition (elastomer layer) are not particularly limited, so long as they indicate the rubber characteristics in the cured state. As a rule-of-thumb, it is preferable for the rubber sheet to not be excessively sticky to the touch. The rubber properties, as measured by the methods according to JIS K 6249, are preferably a Type A Durometer hardness of from 10 to 90, a tensile strength of 2 MPa or more, an elongation of 50 to 800%, and a tear strength of 2 kN/m or more. Outside the above ranges in these properties, there is a possibility that scratches and other damage may readily arise at the surface of the waterproof sheet.

The base material may include a reinforcing layer made of reinforcing fibers. Structurally, the reinforcing layer may be positioned on the surface of the elastomer layer. However, in order for the sheet as a whole to be resistant to warping and distortion, it is preferable for an elastomer layer to be disposed on both sides of the reinforcing layer.

The reinforcing fibers are exemplified by glass fibers, carbon fibers, aramid fibers, polyester fibers and silicon carbide fibers. It is preferable for at least one of these to be used. Although the fiber specifications are not particularly limited, it is desirable for the constituent yarn to have a count--both for the warp and for the weft--of from 5 to 600 tex, and for the reinforcing fiber layer to have a density of from 10 to 150 yarns/25 mm, a thickness of from 0.02 to 0.6 mm and a tension of at least 70 N/25 mm. The reinforcing fiber layer preferably has, for example, a plain weave or satin weave construction. The fibers preferably have an appearance such that, when a sheet of the fibers is set down, the bottom side can be seen through the sheet. In terms of the physical characteristics, transparency is not always necessary, although from the standpoint of the decorativeness of the waterproof sheet, it is preferable for the sheet to have transparency.

In this invention, a sheet is defined as "having transparency" when, as stipulated in JIS K 7105, the total light transmittance is 50% or more. When the total light transmittance for the overall sheet is 50% or more, the color on the bottom side when the sheet is attached to an object can be fully discerned. The total transmittance is more preferably 60% or more. When the color on the bottom side can be thus discerned, this has the advantage of making it possible to check, for example, the degree of deterioration, discoloration or color fading of the object and the occurrence of rusting without having to peel off the waterproof sheet. In terms of maintenance, this is superior to conventional waterproof sheets in that, for example, periodic inspection is easy and the time and effort involved in reattaching the waterproof sheet are greatly reduced.

The waterproof sheet of the invention has a pressure-sensitive adhesive layer laminated onto the base material. In one embodiment shown in FIG. 1, the waterproof sheet 100 has a base material layer 10 obtained by laminating the rubber composition (sheet) 11 described above to each side of a reinforcing layer 12 made of reinforcing fibers, and a pressure-sensitive adhesive layer 20 laminated onto one of the rubber sheets 11. In this case, the two rubber sheets 11 preferably each penetrate into the reinforcing layer 12 and mutually interconnect at the interior of the reinforcing layer 12. The make-up of the base material is not limited to the embodiment shown in FIG. 1.

The cured form of a silicone gel composition is used here as the pressure-sensitive adhesive layer. The silicone gel composition is preferably an addition-curable silicone gel composition which includes:
(D) organopolysiloxane having at least two silicon-bonded alkenyl groups per molecule,
(E) a resinous copolymer composed primarily of R²₃SiO_{1/2} units (wherein R² represents substituted or unsubstituted monovalent hydrocarbon groups, at least one of which is an alkenyl group) and SiO₂ units,
(F) an organohydrogenpolysiloxane having at least two silicon-bonded hydrogen atoms (SiH groups), and
(G) an addition reaction catalyst;
and which has a hardness after curing, as measured with a type CSR-2 durometer, of from 3 to 20.

Component (D) of the addition-curable silicone composition is an organopolysiloxane having an average of at least two alkenyl groups per molecule. The organopolysiloxane used as component (D) may be one having average compositional formula (I) below.

R¹ₐSiO_{(4-a)/2} (I)

In the formula, R¹ represents mutually like or unlike substituted or unsubstituted monovalent hydrocarbon groups of 1 to 10 carbon atoms, and preferably 1 to 8 carbon atoms; and the subscript a is a positive number in the range of 1.5 to 2.8, preferably 1.8 to 2.5, and more preferably 1.95 to 2.05. Here, the silicon-bonded substituted or unsubstituted monovalent hydrocarbon groups represented by R¹ are exemplified by alkyl groups such as methyl, ethyl, propyl, isopropyl, butyl, isobutyl, tert-butyl, pentyl, neopentyl, hexyl, cyclohexyl, octyl, nonyl and decyl groups; aryl groups such as phenyl, tolyl, xylyl and naphthyl groups; aralkyl groups such as benzyl, phenylethyl and phenylpropyl groups; alkenyl groups such as vinyl, allyl, propenyl, isopropenyl, butenyl, hexenyl, cyclohexenyl and octenyl groups; and any of these groups in which some or all of the hydrogen atoms are substituted with halogen atoms such as fluorine, bromine and chlorine, cyano groups or the like, examples of which include chloromethyl, chloropropyl, bromoethyl, trifluoropropyl and cyanoethyl groups. However, it is preferable for 90 mol% or more of all the R¹ groups to be methyl groups.

In this case, it is necessary for at least two of the R¹ groups to be alkenyl groups (in which the number of carbon atoms is preferably from 2 to 8, and more preferably from 2 to 6). The alkenyl group content is set to from 0.00001 to 0.05 mol/g, and preferably from 0.00001 to 0.01 mol/g, of all the organic groups R¹ (i.e. the above substituted or unsubstituted monovalent hydrocarbon groups). The alkenyl groups may be bonded to a silicon atom at the end of the molecular chain, may be bonded to a silicon atom partway along the molecular chain or may be bonded to both, although it is preferable to include alkenyl groups that are bonded to silicon atoms on both ends of the molecular chain. At an alkenyl group content below 0.00001 mol/g, sufficient rubber properties are not obtained; at a content greater than 0.05 mol/g, the hardness may be too high and the tack strength may decrease.

The degree of polymerization is not particularly limited, although it is preferable for the organopolysiloxane to be liquid at room temperature. In general, it is desirable to use an organopolysiloxane which has a polystyrene-equivalent average degree of polymerization, as determined by gel permeation chromatography (GPC), of from about 50 to about 20,000, preferably from about 100 to about 10,000, and more preferably from about 100 to about 2,000.

This organopolysiloxane has basically a linear structure in which the main chain consists of repeating diorganosiloxane units (R¹₂SiO_{2/2}) and both ends of the molecular chain are capped with triorganosiloxy groups (R¹₃SiO_{1/2}) or hydroxydiorganosiloxy groups ((HO)R¹₂SiO_{1/2}), although the structure may be partially branched, cyclic or the like.

The resinous copolymer (i.e. copolymer having a three-dimensional network structure) serving as component (E) is composed primarily of R²₃SiO_{1/2} units and SiO₂ units. Here, R² is a substituted or unsubstituted monovalent hydrocarbon group having preferably from 1 to 10 carbon atoms, and especially from 1 to 8 carbon atoms. Examples of monovalent hydrocarbon groups represented by R² include alkyl groups such as methyl, ethyl, propyl, isopropyl, butyl, isobutyl, tert-butyl, pentyl, neopentyl, hexyl, cyclohexyl, octyl, nonyl and decyl groups; aryl groups such as phenyl, tolyl, xylyl and naphthyl groups; aralkyl groups such as benzyl, phenylethyl and phenylpropyl groups; alkenyl groups such as vinyl, allyl, propenyl, isopropenyl, butenyl, hexenyl, cyclohexenyl and octenyl groups; and any of these groups in which some or all of the hydrogen atoms are substituted with halogen atoms such as fluorine, bromine and chlorine, cyano groups or the like, examples of which include chloromethyl, chloropropyl, bromoethyl, trifluoropropyl and cyanoethyl groups.

The resinous copolymer serving as component (E) may be one consisting only of the above R²SiO_{1/2} units and SiO₂ units or, if necessary, it may include R²₂SiO units and R²SiO_{3/2} units (R² being as defined above) in a total amount thereof, based on the overall copolymer weight, of 50% or less, and preferably 40% or less. The molar ratio of R²₃SiO_{1/2} units to SiO₂ units, expressed as R²₃SiO_{1/2}/SiO₂, is preferably from 0.5 to 1.5, and more preferably from 0.5 to 1.3. At a molar ratio smaller than 0.5 or larger than 1.5, a sufficient rubber hardness and strength are not obtained. In addition, the resinous copolymer serving as component (E) preferably has at least two alkenyl groups per molecule, the alkenyl group content being 0.0001 mol/g or more, preferably from 0.0001 to 0.003 mol/g, and more preferably from 0.0002 to 0.002 mol/g. When the alkenyl group content is lower than 0.0001 mol/g, sufficient rubber properties are not obtained; when it is higher than 0.003 mol/g, the hardness may become too high and the tack strength may decline.

The resinous copolymer may be one which, at room temperature (25°C), is a liquid having fluidity (e.g. the viscosity at 25°C, as measured with a Brookfield rotational viscometer, is 10 mPa·s or more, and preferably 50 mPa·s or more) or is a solid lacking fluidity. When the resinous copolymer is a solid, it may be used in solution within an organic solvent such as toluene. For example, when a solid resinous copolymer is dissolved in toluene, the viscosity of a 50 wt% toluene solution at 25°C, as measured with a rotational viscometer, is preferably from 10 to 500,000 mPa·s, and more preferably from 1,000 to 200,000 mPa·s. This resinous copolymer can generally be prepared by hydrolysing a suitable chlorosilane or alkoxysilane by a method known to the art.

Components (D) and (E) are included in the following amounts, assuming the total amount of components (D) and (E) to be 100 parts by weight. The amount of component (D) is in the range of 20 to 100 parts by weight, preferably 20 to 95 parts by weight, and more preferably 30 to 95 parts by weight. The amount of component (E) is in the range of 0 to 80 parts by weight, preferably 5 to 80 parts by weight, and more preferably 5 to 70 parts by weight. When the amount of component (D) is too low, i.e. when the amount of component (E) is too high, the rubber properties markedly decrease. From the standpoint of tackiness and strength, it is preferable to use component (E) together with component (D).

Component (F) is an organohydrogenpolysiloxane having at least two, and preferably three or more, silicon-bonded hydrogen atoms (SiH groups) that acts as a curing agent. The SiH groups on the molecule crosslink via hydrosilylation addition reactions with the silicon-bonded alkenyl groups in components (D) and (E), thereby curing the composition. The organohydrogenpolysiloxane serving as this component (F) is represented by the following average compositional formula (II).

R³_{b}H_{c}SiO_{(4-b-c)/2} (II)

In the formula, R³ is a substituted or unsubstituted monovalent hydrocarbon group of 1 to 10 carbon atoms. The subscript b is a positive number from 0.7 to 2.1, the subscript c is a positive number from 0.001 to 1.0, and the sum b+c is a positive number from 0.8 to 3.0. Preferred use can be made of an organohydrogenpolysiloxane having at least two (generally from 2 to 200), preferably from 3 to 100, and more preferably from 3 to 50, silicon-bonded hydrogen atoms per molecule. Here, the monovalent hydrocarbon group R³ is exemplified by the same groups mentioned above for R¹, although it is preferable for the organohydrogenpolysiloxane to have no aliphatic unsaturated groups. Also, b is preferably from 0.8 to 2.0, c is preferably from 0.01 to 1.0, and b+c is preferably from 1.0 to 2.5. The organohydrogenpolysiloxane has a molecular structure which may be linear, cyclic, branched, or a three-dimensional network structure. Preferred use can be made of an organohydrogenpolysiloxane that is liquid at room temperature (25°C) and has a number of silicon atoms per molecule (or a degree of polymerization) of from 2 to 300, and especially from 4 to 150. The silicon-bonded hydrogen atoms may be positioned at the ends of the molecular chain, may be positioned partway along the molecular chain, or may be positioned in both places, although an organohydrogenpolysiloxane having silicon-bonded hydrogen atoms at the ends of the molecular chain where the reaction rate is rapid is preferred. Examples thus include methylhydrogenpolysiloxanes capped at both ends with trimethylsiloxy groups, dimethylsiloxane/methylhydrogensiloxane copolymers capped at both ends with trimethylsiloxy groups, dimethylpolysiloxanes capped at both ends with dimethylhydrogensiloxy groups, dimethylsiloxane/methylhydrogensiloxane copolymers capped at both ends with dimethylhydrogensiloxy groups, copolymers consisting of (CH₃)₂SiO_{1/2} units and SiO_{4/2} units, and copolymers consisting of (CH₃)₂HSiO_{1/2} units, SiO_{4/2} units and (C₆H₅)SiO_{3/2} units.

This organohydrogenpolysiloxane serving as component (F) is included in an amount, per 100 parts by weight of components (D) and (E) combined, of from 0.5 to 20 parts by weight, and preferably from 1.0 to 10 parts by weight. When the content is too low or too high, a sufficient rubber strength cannot be obtained. This organohydrogenpolysiloxane serving as component (F) is included in an amount such that the amount of silicon-bonded hydrogen atoms (SiH groups) in component (F) with respect to the silicon-bonded alkenyl groups included in components (D) and (E), expressed as a molar ratio, is from 0.5 to 1.1, and preferably from 0.6 to 1.0. Assuming that the addition crosslinking reaction proceeds to 100% completion, the organohydrogenpolysiloxane is preferably included in an amount corresponding to from 0.005 to 0.01 mol/g.

Here, the molar ratio of SiH groups in component (F) with respect to the amount of alkenyl groups present within the system is expressed as H/Vi. Also, the "theoretical crosslinking amount" refers to the amount of crosslinking when silicon-bonded hydrogen atoms (SiH groups) within component (F) added to the system and alkenyl groups present in the system have 100% reacted. When the ratio H/Vi is 1 or less, the amount of SiH groups becomes the theoretical crosslinking amount; when H/Vi is 1 or more, the amount of alkenyl groups becomes the theoretical crosslinking amount. The amount of these functional groups may be an amount based on a computational formula during design of the composition, although using a measured value is more preferred. Measurement of the amount of functional groups is carried out by measuring either the amount of hydrogen gas that evolves or the amount of unsaturated groups by a technique such as NMR spectroscopy according to a known method of analysis. The amount of functional groups within the system is expressed as X×Y mol/g, where the amount of functional groups within the molecule is X mol/g and the amount of addition is Y parts by weight.

Component (G) may be a catalyst that is known to the art. In general, a platinum group metal-based addition reaction catalyst such as platinum or a platinum compound (generally in an amount of from 1 to 1,000 ppm with respect to the total alkenyl group-containing organopolysiloxane of components (D) and (E)) may be used.

The pressure-sensitive adhesive layer exhibits tackiness even in an uncured state. However, assuming that the waterproof sheet will be used over a long period of time, it is preferable for the change in tackiness over time to be small. The change over time is smaller when the pressure-sensitive adhesive layer has been cured. The method of curing is not particularly limited, although one where the silicone gel composition has already been cured and is rendered into a sheet to form the pressure-sensitive adhesive layer is preferable to a method where curing is effected at the worksite.

The pressure-sensitive adhesive layer has a hardness which is lower than that of the base material layer, the Asker C hardness being preferably a positive number less than 10. At more than 10, the tackiness may end up decreasing. More preferably, the hardness as measured with an Asker type CSR-2 durometer, which is suitable for measuring hardnesses lower than Asker C hardnesses, is from 3 to 20, and especially from 10 to 18.

The tack strength obtained when, in accordance with JIS Z 0237, the pressure-sensitive adhesive layer is attached to a mortar test piece and a 180° peel test is carried out at a peel rate of 300 mm/min, is preferably at least 5 N/25 mm, and more preferably in the range of 5 to 30 N/25 mm. At less than 5 N/25 mm, in cases where the pressure-sensitive adhesive layer is attached to a given adherend, the tack strength to the adherend is low, making attachment difficult. On the other hand, a tack strength in excess of 30 N/25 mm may give rise to problems in terms of reworkability and re-adhesion.

In addition to the above-described ingredients, other ingredients may be optionally included in the compositions that form the base material layer and the pressure-sensitive adhesive layer. Examples of such other ingredients include fillers such as fumed silica, precipitated silica, quartz powder, diatomaceous earth and calcium carbonate; electroconductive materials such as carbon black, conductive zinc white and metal powders; and heat stabilizers such as iron oxide and cerium oxide. In addition, hydrosilylation reaction regulators such as nitrogen-containing compounds, acetylene compounds, phosphorus compounds, nitrile compounds, carboxylates, tin compounds, mercury compounds and sulfur compounds, internal mold release agents such as dimethyl silicone fluids, tackifiers, and thixotropic agents may be optionally included.

The waterproof sheet has a thickness of preferably from 0.7 to 6 mm. Of this thickness, the thickness of the base material layer is from 0.2 to 3 mm, and preferably from 0.2 to 1.5 mm. A base material layer thickness of less than 0.2 mm may be insufficient to take full advantage of the sheet elasticity; a base material layer thickness of more than 3 mm may result in a higher weight, may adversely affect attachment of the waterproof sheet, or may be disadvantageous in terms of cost. The pressure-sensitive adhesive layer has a thickness which is preferably in the range of 0.5 to 3 mm, and more preferably in the range of 0.5 to 2 mm. At less than 0.5 mm, the pressure-sensitive adhesive layer is unable to absorb surface irregularities on the adherend to which it is attached; at more than 3 mm, the rubber strength on the bonding side of the sheet becomes dependent on the pressure-sensitive adhesive layer and so there is a possibility of rubber failure arising.

An exemplary method of forming the waterproof sheet is described. The elastomer layers are integrally united with the reinforcing fibers making up the reinforcing layer by dipping, coating, calendering, screen printing or the like, thereby giving the base material layer. In this case, calendering can be suitably used and is thus preferred.

The pressure-sensitive adhesive layer is laminated onto the base material layer. The adhesive layer may be formed after formation of the base material layer by curing of the base material layer-forming composition. Alternatively, the base material layer-forming composition may be sheeted by calendering onto a film of polyethylene terephthalate (PET) or the like, and the adhesive layer-forming composition laminated thereon in an uncured state.

One method for obtaining a laminated sheet involves dipping, coating or screen printing the pressure-sensitive adhesive layer-forming composition onto the base material layer-forming composition. Coating can be suitably used and is thus preferred. The conditions for such curing are preferably a temperature of from 80 to 250°C and a period of from 10 seconds to one hour. In addition, post-curing at 120 to 250°C for about 1 to 100 hours may be carried out for such purposes as to remove low-molecular-weight components.

The waterproof silicone rubber sheet of the invention is constructed of a base material layer obtained by curing the above-described silicone rubber composition, and has laminated on one side thereof a pressure-sensitive adhesive layer made up of a cured silicone gel composition. In addition, a film layer containing a silicone resin of the average compositional formula (1) below

[RSiO_{3/2}]ₘ[R₂SiO]ₙ (1)

(wherein R represents like or unlike substituted or unsubstituted monovalent hydrocarbon groups of 1 to 20 carbon atoms, m is from 0.45 to 1.0, n is from 0 to 0.55, and m+n ≤ 1.0) is formed on the other side of the base material layer. In FIG. 1 showing this construction, the film layer is denoted as 200.

The silicone resin is preferably used as an emulsion. Here, the silicone resin is obtained by hydrolysing and condensing a silane compound. Because the silicone resin has the ability to form a film having a high hardness and excellent weather resistance, water resistance, heat resistance and water repellency, it is effective as a coating agent. The method used when rendering the silicone resin into an emulsion may involve directly emulsifying a silicone resin solution prepared in an organic solvent system such as toluene or xylene. However, such organic solvent-containing silicone resin emulsions sometimes have a poor stability, in addition to which the use of organic solvents such as toluene and xylene has been restricted in recent years on account of environmental concerns. Use can therefore be made of an organosilicon resin emulsion in which a water-miscible organic solvent such as the ether compound diethylene glycol diethyl ether has been substituted for the above organic solvent. An emulsion obtained by stirring and mixing together, and thus dispersing in an emulsified form, ingredients which include the following is preferred:
(A) 100 parts by weight of the silicone resin having the above average compositional formula (1),
(B) 1 to 50 parts by weight of an emulsifying agent, and
(C) 20 to 1,000 parts by weight of water.

The silicone resin of component (A) has the average compositional formula (1) below

[RSiO_{3/2}]ₘ[R₂SiO]ₙ (1)

(wherein R represents like or unlike substituted or unsubstituted monovalent hydrocarbon groups of 1 to 20 carbon atoms, m is from 0.45 to 1.0, n is from 0 to 0.55, and m+n ≤ 1.0).

Here, R represents like or unlike substituted or unsubstituted monovalent hydrocarbon groups of 1 to 20 carbon atoms. Specific examples include alkyl groups such as methyl, ethyl, propyl, isopropyl, butyl, isobutyl, tert-butyl, pentyl, neopentyl, hexyl, cyclohexyl, octyl, nonyl and decyl groups; aryl groups such as phenyl, tolyl, xylyl and naphthyl groups; aralkyl groups such as benzyl, phenylethyl and phenylpropyl groups; and alkenyl groups such as vinyl, allyl, propenyl, isopropenyl, butenyl, hexenyl, cyclohexenyl and octenyl groups. Also included are any of these groups in which some (one or more) of the hydrogen atoms are substituted with reactive groups such as epoxy, mercapto, methacrylic, acrylic, carboxyl or amino groups.

The molar ratio (m) of [RSiO_{3/2}] units in the silicone resin is from 0.45 to 1.0, and preferably from 0.50 to 1.0. When this is lower than 0.45, the film hardness becomes low and the durability decreases. The molar ratio (n) of the [R₂SiO] units in the silicone resin is from 0 to 0.55, and preferably from 0 to 0.50. When this is higher than 0.55, the film hardness becomes low and the durability decreases. Moreover, in this invention, when the film hardness is low, in cases where the waterproof sheet is installed outdoors, soiling of the sheet surface by dust, soot and the like cannot be fully prevented. The sum m+n satisfies the condition m+n ≤ 1.0, and is preferably such that 0.45 ≤ m+n ≤ 1.0.

Such an organosilicon resin can be prepared by a known method. For example, the resin can be obtained by subjecting chlorosilanes or alkoxysilanes of the corresponding units to hydrolysis and condensation reactions. Because these organosilicon resins are in solid form when the content of [RSiO_{3/2}] units is high or tend to gel when the condensation reactivity is high, they are generally handled after being diluted with an organic solvent such as toluene or xylene, although use following substitution of such an organic solvent with a water-miscible organic solvent is possible.

Such water-miscible organic solvents are exemplified by alcohol compounds, ketone compounds, ester compounds and ether compounds. Specific examples include cellosolve, propyl cellosolve, butyl cellosolve, propylene glycol monomethyl ether, diethylene glycol diethyl ether, methyl carbitol, carbitol, propyl carbitol, cellosolve acetate, butyl cellosolve acetate, carbitol acetate and butyl carbitol acetate.

The emulsifying agent of component (B) is not particularly limited, so long as it is one which emulsifies and disperses the organosilicon resin in water. The emulsifying agent is exemplified by nonionic surfactants such as polyoxyethylene alkyl ethers, polyethylene-propylene alkyl ethers, polyoxyethylene alkyl phenyl ethers and polyoxyethylene fatty acid esters; anionic surfactants such as alkyl sulfates, alkylbenzenesulfonates, alkyl sulfosuccinates, alkyl phosphates, polyoxyethylene alkyl ether sulfates and polyoxyethylene alkyl phenyl ether sulfates; cationic surfactants such as quaternary ammonium salts and alkylamine acetates; and amphoteric surfactants such as alkyl betaines and alkyl imidazolines. Specific examples of these include polyoxyethylene octyl ether, polyoxyethylene nonyl ether, polyoxyethylene lauryl ether and polyoxyethylene styrenated phenyl ether. These emulsifying agents may be used singly or two or more may be used in combination.

The amount of component (B) added must be from 1 to 50 parts by weight per 100 parts by weight of component (A). At less than 1 part by weight, emulsification is difficult. At more than 50 parts by weight, the film hardness, transparency and adherence to the base material decrease. The amount is preferably from 2 to 30 parts by weight.

The water included as component (C) is used to cause phase inversion, as an emulsion, of the above water-miscible organic solvent solution of the organosilicon resin and the emulsifying agent, and dilute the organosilicon resin emulsion system. The amount of water included here as component (C) is preferably from 20 to 1,000 parts by weight, and more preferably from 50 to 500 parts by weight, by component (A).

The resulting organosilicon resin emulsion composition may be coated onto the surface of a waterproof silicone rubber sheet prior to installing the sheet outdoors, or may be coated onto the surface of a waterproof silicone rubber sheet following outdoor installation. In the latter case, coating is preferably done within one week following installation, and more preferably immediately after installation. With the passage of more than one week, there is a possibility that sand, dust, dirt and the like will already have started accumulating on the sheet surface, making it necessary to clean the surface. Also, when the sheet surface is in a water-wetted state, the organosilicon resin emulsion composition may be diluted by the water or end up running, so that proper film formation does not occur. For the same reason, it is desirable to avoid coating when there is an imminent forecast of rain or the like. Coating may be carried out by applying the composition directly onto the surface of the sheet with a paddle, brush or the like. Following application, film formation occurs in 30 minutes to 2 hours at room temperature or with heating if necessary, although a more stable film can be obtained when about 8 hours have elapsed. Coating in an amount that wets the surface suffices, and gives a film having a thickness of from 10 to 100 µm, especially from 10 to 50 µm. Because the film tends to become hard and brittle when the composition is applied too thickly, adjustment so as to obtain a film thickness of 100 µm is preferred.

Another good reason for using an organosilicon resin emulsion composition is that it enables the amount of solvents such as toluene and xylene used to be greatly reduced.

The waterproof silicone rubber sheet of the invention can be used by attaching the pressure-sensitive adhesive layer onto an object in order to prevent the infiltration of moisture such as rainwater. One example of a method for doing so is described. As shown in FIG. 2, to prevent rainwater infiltration to a boundary region between the bottom side and the foundation of an outdoor tank, the waterproof silicone rubber sheet of the invention is liquid-tightly attached so as to cover the boundary region. Mutually adjoining sheets are preferably overlapped, the width of such overlapping areas being preferably in the range of 5 to 50 mm, and more preferably in the range of 10 to 20 mm. At an overlap width smaller than 5 mm, peeling may arise during installation, making it impossible to completely cover the boundary region, as a result of which the waterproofing function may not be achieved. At an overlap width greater of 50 mm or more, the amount of waterproof sheet required to cover the boundary region increases, resulting in higher costs.

The expansion joints in parapets installed on a highway or the like serve to regulate expansion and contraction of the road due to heat and cold. Because these expansion joints are pathways for discharging moisture such as rainwater away from the roadway, a waterproof sheet is laid down so as to straddle parapet sections. Similar examples include drainage systems and the like installed in median strips and roadway bypasses.

Describing more fully the method of installing the waterproof sheet in FIG. 2, a tank plate 41 is installed on a foundation 50. Also shown is a tank wall 42. The contents held within the tank 40 may be, for example, petroleum, asphalt or various types of gases. The tank 40 is generally cylindrical and of a size that is typically, but not limited to, a diameter of from 10 to 80 meters and a height of from 10 to 50 meters. When installing the waterproof sheet 100, a sealant 60 is applied for the purpose of filling in the step between the tank plate 41 and the foundation 50. The waterproof sheet 100 is stretched so as to extend from a margin between the tank plate 41 and the tank wall 42 to the surface portion of the tank plate 41, the surface portion of the sealant 60 and the surface portion of the foundation 50. In addition, the sealant 60 can be applied to both the tank plate side and foundation side edges of the waterproof sheet 100.

Alternatively, as shown in FIG. 3, the waterproof sheet 100 can be laid down so as to straddle parapet sections 30, 30 installed on a highway or the like, thereby covering the expansion joint between the parapets 30, 30.

The portion of the object to which the waterproof sheet is to be attached may be pre-treated so as to make the sheet easy to attach. However, because the waterproof sheet has tackiness, the portion of the object to which the waterproof sheet is to be attached need not always be pre-treated. Attachment is carried out by using the tacky surface as the side to be attached. In cases where a step arises at the boundary portion and the side to be attached will likely be subjected to excessive stress, it is preferable to carry out a means for eliminating the step. Examples of methods for doing so include laying down mortar on the step or using a backup material.

Although it is not always necessary to use a sealant when attaching the waterproof sheet, to more securely attach the sheet, a sealant may be used at boundary portions of the sheet and at areas where one sheet overlaps another. The sealant is not particularly limited; use can be made of any suitable known sealant, such as silicone, polysulfide or polyurethane-type sealants. However, from the standpoint of affinity with the waterproof sheet material of the invention, the use of a silicone sealant is preferred. Commercial products may be used as such sealants. For example, use can be made of silicone sealants such as Sealant Master 300, Sealant 70 and Sealant 701 from Shin-Etsu Chemical Co., Ltd.

By using a waterproof sheet having tackiness as the waterproof sheet of the invention, primer-less application is possible, enabling the installation period to be greatly shortened.

Up until now, in most cases, sealant has been directly applied or waterproofing has not been specially carried out. However, in cases where there are hot and cold differences due to the climate, or where there is a lot of moisture such as rain or snow on account of the weather and condensation forms, application is impossible until the surface to which the sheet is to be applied dries. By using the waterproof sheet of the invention, application can be carried out without a primer. Therefore, even when moisture remains on the surface to which the sheet is to be attached, application is possible merely by adequately wiping the surface with a rag or the like. Hence, this invention has the groundbreaking feature of enabling installation of the sheet to begin immediately after the weather has recovered.

Because the waterproof sheet of the invention exhibits a waterproof function owing to tack strength, it can be easily peeled away and the interior examined simply by removing the sealed portion that secures the end of the sheet. Moreover, when the waterproof sheet has transparency, the interior can be examined even without peeling off the sheet, in which case it is not even necessary to remove the sealed area that secures the end of the sheet.

Another major feature is that the waterproof sheet is able to exhibit a waterproof function at the re-tack strength.

### EXAMPLES

The invention is illustrated more fully below by way of Working Examples and Comparative Examples, although the invention is not limited by these Examples. In the Examples below, parts and percent are by weight.

### Production of Waterproof Silicone Rubber Sheets

### Production of Cured Sheet A

The curing agents C-19A (1.0 part) and C-19B (2.5 parts) (both products of Shin-Etsu Chemical Co., Ltd.) were added to the millable silicone rubber composition KE-675-U (Shin-Etsu Chemical Co., Ltd.) and mixed on a two-roll mill, following which the mixture was calendered on a 100 µm embossed PET film into a 0.8 mm thick sheet and successively heated and cured for 10 minutes at 140°C in a heating oven, thereby giving Base Material Layer A in which the calendered mixture is laminated on the PET film.

In a separate procedure, a 50 wt% toluene solution containing 92.5 parts of a dimethylpolysiloxane capped at both ends with dimethylvinylsiloxy groups and having an average degree of polymerization of 1,000 and 7.5 parts of a resinous copolymer consisting of (CH₂=CH)(CH₃)₂SiO_{1/2} units, (CH₃)₃SiO_{1/2} units and SiO₂ units [((CH₂=CH)(CH₃)₂SiO_{1/2} units + (CH₃)₃SiO_{1/2} units)/SiO₂ units (molar ratio) = 0.85; CH₂=CH- group content, 0.0008 mol/g] that is a solid at room temperature (25°C) was placed in an agitator/mixer and mixed for 30 minutes, following which the toluene was completely distilled off (alkenyl group content, 0.00865 mol/g). To 100 parts of this silicone base was added 6.0 parts of a SiH group-containing resinous copolymer composed primarily of (CH₃)₂HSiO_{1/2} units and SiO₂ units (SiH group content, 0.0013 mol/g) as a crosslinking agent and 0.1 part of ethynyl cyclohexanol as a reaction regulator, and stirring was continued for 15 minutes, thereby giving Silicone Rubber Composition A. Next, 0.2 part of a platinum catalyst (Pt concentration, 1 %) was mixed into Silicone Rubber Composition A, giving Adhesive Composition A.

Adhesive Composition A was lamination coated to a thickness of 1.0 mm onto Base Material Layer A using a comma coater, and heated and cured for 5 minutes at 140°C in a heating oven, giving a two-layer Waterproof Laminated Cured Sheet A. The sheet thus obtained had an average thickness of 1.8 mm.

### Production of Cured Sheet B

Base Material Layer B having an average thickness of 0.5 mm was obtained by using a coater to apply a mixture/dispersion of the liquid silicone rubber composition KE-1950-60A/KE-1950-60B = 1/1 (both products of Shin-Etsu Chemical Co., Ltd.) to both sides of an IPC Spec 1080 glass cloth (thickness, 0.055 mm; from Nitto Boseki Co., Ltd.), and heating and curing for 15 minutes at 150°C in a curing oven.

Adhesive Composition A was lamination coated to a thickness of 1.0 mm onto Base Material Layer B using a comma coater, and heated and cured for 5 minutes at 140°C in a heating oven, giving a four-layer Waterproof Laminated Cured Sheet B. The sheet thus obtained had an average thickness of 1.5 mm.

### Working Example 1

### Preparation of Silicone Resin Emulsion Composition

Silicon Resin Emulsion Composition A was obtained by placing 53 parts of a 77% solution of Silicone Resin 1 of the following average compositional formula

[(CH₃)SiO_{3/2}]_{0.65}[(C₆H₅)SiO_{3/2}]_{0.35}

dissolved in diethylene glycol diethyl ether, 2.7 parts of Noigen XP-30 (DKS Co., Ltd.), 4.7 parts of Emulgen 1150S-60 (Kao Corporation) and 0.5 part of Newcol 291M (Nippon Nyukazai Co., Ltd.) as emulsifying agents, and 4 parts of water (for phase inversion) in an agitator/mixer and mixing for 30 minutes, subsequently adding 0.03 part of Proxel BDN (Lonza Japan) as preservative and 35 parts of water (for dilution), and stirring to uniformity.

### Surface Treatment of Sheet

Using a paddle, the resulting Silicone Resin Emulsion Composition A was applied onto the non-adhesive surface (base material layer side) of Waterproof Laminated Cured Sheet A to a uniform thickness. The applied composition was left to stand at room temperature for about 10 minutes, thereby forming a surface treatment layer (film layer) having a thickness of about 10 to 20 µm on the surface of Waterproof Laminated Cured Sheet A.

The results of evaluations carried out by the methods shown below are presented in Table 1. The evaluation methods in Working Example 1 were similarly used in the subsequent Working Examples and Comparative Examples.

### Working Example 2

Aside from carrying out surface treatment using a 25% solution of Silicone Resin 1 used in Working Example 1 dissolved in xylene, the same procedure was carried out as in Working Example 1.

### Working Example 3

Aside from carrying out surface treatment using Silicone Resin Emulsion Composition B obtained in the same way as in Working Example 1, except for the use of Silicone Resin 2 of the following average compositional formula

[(CH₃)SiO_{3/2}]_{0.88}[(CH₃)₂SiO]_{0.12}

in place of Silicone Resin 1 used in Working Example 1, the same procedure was carried out as in Working Example 1.

### Working Example 4

Aside from carrying out surface treatment using Silicone Resin Emulsion Composition C obtained in the same way as in Working Example 1, except for the use of Silicone Resin 3 of the following average compositional formula

[(CH₃)SiO_{3/2}]_{0.15}[(C₆H₅)SiO_{3/2}]_{0.36}[(CH₃)₂SiO]_{0.31}[(C₆H₅)₂SiO]_{0.18}

in place of Silicone Resin 1 used in Working Example 1, the same procedure was carried out as in Working Example 1.

### Comparative Example 1

Aside from the use, in Working Example 1, of Waterproof Laminated Cured Sheet A that has not been surface treated, the same procedure was carried out as in Working Example 1.

### Comparative Example 2

Aside from carrying out surface treatment using Silicone Resin Emulsion Composition D obtained in the same way as in Working Example 1, except for the use of Silicone Resin 4 of the following average compositional formula

[(CH₃)SiO_{3/2}]_{0.08}[(C₆H₅)SiO_{3/2}]_{0.30}[(CH₃)₂SiO]_{0.60}[(C₆H₅)₂SiO]_{0.02}

in place of Silicone Resin 1 used in Working Example 1, the same procedure was carried out as in Working Example 1.

### Comparative Example 3

Aside from carrying out surface treatment using Silicone Resin Emulsion Composition E obtained in the same way as in Working Example 1, except for the use of Silicone Resin 5 of the following average compositional formula

[(C₆H₅)SiO_{3/2}]_{0.33}[(CH₃)₂SiO]_{0.67}

in place of Silicone Resin 1 used in Working Example 1, the same procedure was carried out as in Working Example 1.

### Working Examples 5 to 8

Aside from using Waterproof Laminated Cured Sheet B instead of Waterproof Laminated Cured Sheet A used in Working Examples 1 to 4, the same procedure was carried out as in Working Example 1.

### Comparative Examples 4 to 6

Aside from using Waterproof Laminated Cured Sheet B instead of Waterproof Laminated Cured Sheet A used in Comparative Examples 1 to 3, the same procedure was carried out as in Working Example 1.

### Evaluation Tests

### Accelerated Soiling

Each of the surface-treated waterproof silicone rubber sheets was placed flat with the treated side facing up (with the Sheet A side facing up in Comparative Example 1), powdery soil ingredients were sprinkled on top, and the entire surface of the sheet was lightly rubbed by hand. Cases in which the sheet surface thereafter was darkly soiled (meaning that soil ingredients adhered to the surface) were rated as "×," and cases in which the sheet surface did not darken (meaning that soil ingredients did not adhere to the surface) were rated as "○." Powdered carbon black and sand having an average particle size under 1 mm, combined in a 1:3 weight ratio, were used as the soil ingredients.

### Outdoor Exposure

The waterproof silicone rubber sheets were each attached to a metal plate in Singapore, where the external soiling of waterproof sheets (meaning that the sheet surface is in a darkly soiled state) was severe, and subjected to outdoor weathering. The external appearance of the sheet after 6 months and after 12 months was visually examined and compared with the initial state of the sheet. Similarly, in Japan, the waterproof sheets were each attached to a mortar block and subjected to outdoor exposure. The external appearance after 6 months and after 12 months was visually examined and compared with the initial state of the sheet. Sheets that were darkly soiled were rated as "×," sheets that were lightly soiled were rated as "Δ," and sheets that were free of conspicuous soiling were rated as "○."

### Waterproofness

In Japan, the waterproof silicone rubber sheets were each attached to a mortar block and subjected to outdoor exposure. Sheets in which, after 12 months had elapsed, rainwater had infiltrated the attached surface were rated as "× "; sheets in which rainwater infiltration had not occurred were rated as "○."

**Table 1**

| | Working Example | | | | Comparative Example | | |
|---|---|---|---|---|---|---|---|
| | 1 | 2 | 3 | 4 | 1 | 2 | 3 |
| Waterproof sheet | A | A | A | A | A | A | A |
| Silicone Resin 1 | ○ | □ | | | - | | |
| Silicone Resin 2 | | | ○ | | - | | |
| Silicone Resin 3 | | | | ○ | - | | |
| Silicone Resin 4 | | | | | - | ○ | |
| Silicone Resin 5 | | | | | - | | ○ |
| T units (mol%) | 100 | 100 | 88 | 51 | - | 38 | 33 |

| Properties and Evaluations | | | | | | | |
|---|---|---|---|---|---|---|---|
| Accelerated soiling | ○ | ○ | ○ | ○ | × | × | × |

| Outdoor exposure (6 months) | | | | | | | |
|---|---|---|---|---|---|---|---|
| Singapore | ○ | ○ | ○ | ○ | Δ | Δ | Δ |
| Japan (Gunma Prefecture) | ○ | ○ | ○ | ○ | Δ | ○ | ○ |

| Outdoor exposure (12 months) | | | | | | | |
|---|---|---|---|---|---|---|---|
| Singapore | ○ | ○ | ○ | ○ | × | Δ | × |
| Japan (Gunma Prefecture) | ○ | ○ | ○ | ○ | Δ | Δ | Δ |
| Waterproofness (12 months) | ○ | ○ | ○ | ○ | ○ | ○ | ○ |

| | | | | | | | |
|---|---|---|---|---|---|---|---|
| * Surface treatment with the silicone resins was carried out in the state of an emulsion (○) or in the state of a silicone resin solution (□). | | | | | | | |

**Table 2**

| | Working Example | | | | Comparative Example | | |
|---|---|---|---|---|---|---|---|
| | 5 | 6 | 7 | 8 | 4 | 5 | 6 |
| Waterproof sheet | B | B | B | B | B | B | B |
| Silicone Resin 1 | ○ | □ | | | - | | |
| Silicone Resin 2 | | | ○ | | - | | |
| Silicone Resin 3 | | | | ○ | - | | |
| Silicone Resin 4 | | | | | - | ○ | |
| Silicone Resin 5 | | | | | - | | ○ |
| T units (mol%) | 100 | 100 | 88 | 51 | - | 38 | 33 |

| Properties and Evaluations | | | | | | | |
|---|---|---|---|---|---|---|---|
| Accelerated soiling | ○ | ○ | ○ | ○ | × | × | × |

| Outdoor exposure (6 months) | | | | | | | |
|---|---|---|---|---|---|---|---|
| Singapore | ○ | ○ | ○ | ○ | Δ | Δ | Δ |
| Japan (Gunma Prefecture) | ○ | ○ | ○ | ○ | Δ | ○ | ○ |

| Outdoor exposure (12 months) | | | | | | | |
|---|---|---|---|---|---|---|---|
| Singapore | ○ | ○ | ○ | ○ | × | Δ | × |
| Japan (Gunma Prefecture) | ○ | ○ | ○ | ○ | Δ | Δ | Δ |
| Waterproofness (12 months) | ○ | ○ | ○ | ○ | ○ | ○ | ○ |

| | | | | | | | |
|---|---|---|---|---|---|---|---|
| * Surface treatment with the silicone resins was carried out in the state of an emulsion (○) or in the state of a silicone resin solution (□). | | | | | | | |

### REFERENCE SIGNS LIST

- 10:: Base material layer
- 11:: Rubber composition (sheet)
- 12:: Reinforcing fibers (reinforcing layer)
- 20:: Pressure-sensitive adhesive layer
- 100:: Waterproof sheet
- 200:: Film layer
- 30:: Parapet
- 40:: Tank
- 41:: Tank plate
- 42:: Tank wall
- 50:: Foundation
- 60:: Sealant

## Claims

1. A waterproof silicone rubber sheet comprising a base material layer obtained by curing a silicone rubber composition, a pressure-sensitive adhesive layer made of a cured silicone gel composition laminated onto one side of the base material layer, and a film layer which is disposed on the other side of the base material layer and includes a silicone resin of the average compositional formula (1)
[RSiO_{3/2}]ₘ[R₂SiO]ₙ (1)
(wherein R represents like or unlike substituted or unsubstituted monovalent hydrocarbon groups of 1 to 20 carbon atoms, m is from 0.45 to 1.0, n is from 0 to 0.55, and m+n ≤ 1.0).

2. Waterproof silicone rubber sheet of claim 1, wherein the film layer is the cured form of an emulsion composition comprising:
(A) 100 parts by weight of the silicone resin of formula (1),
(B) 1 to 50 parts by weight of an emulsifying agent, and
(C) 20 to 1,000 parts by weight of water.

3. Waterproof silicone rubber sheet of claim 1 or 2, wherein the silicone gel composition comprises:
(D) 20 to 100 parts by weight of organopolysiloxane having at least two silicon-bonded alkenyl groups per molecule,
(E) 0 to 80 parts by weight of resinous copolymer composed primarily of R²₃SiO_{1/2} units (wherein R² represents substituted or unsubstituted monovalent hydrocarbon groups, at least one of which is an alkenyl group) and SiO₂ units (with the proviso that the sum of components (D) and (E) is 100 parts by weight),
(F) organohydrogenpolysiloxane having at least two silicon-bonded hydrogen atoms (SiH groups), in an amount of from 0.5 to 20 parts by weight per 100 parts by weight of the sum of components (D) and (E), and
(G) addition reaction catalyst in an amount of from 1 to 1,000 ppm based on the sum of the alkenyl group-containing organopolysiloxanes in components (D) and (E);
and the composition has a hardness after curing, as measured with a type CSR-2 durometer, of from 3 to 20.

4. Waterproof silicone rubber sheet of any one of claims 1 to 3 wherein the base material layer comprises a reinforcing layer which is made of reinforcing fibers and has on either side thereof an elastomer layer made of a cured silicone rubber composition.

5. A method for waterproofing with a waterproof silicone rubber sheet, comprising the step of liquid-tightly covering an area containing a place where moisture infiltration is to be prevented by installing side-by-side a plurality of waterproof silicone rubber sheets of any one of claims 1 to 4, and liquid-tightly overlapping and attaching the mutually adjoining waterproof sheets to an overlap width of at least 5 mm.

6. A method for waterproofing with a waterproof silicone rubber sheet of claim 5, wherein the waterproof sheet is attached directly without a primer to the place where moisture infiltration is to be prevented, and lateral ends and edges of the attached waterproof sheet are sealed.
